# EUROPÄISCHE PATENTSCHRIFT

(11) **EP 1 005 411 B1**
(45) Veröffentlichungstag und Bekanntmachung des Hinweises auf die Patenterteilung: **04.12.2002**
(21) Anmeldenummer: 98947430.9
(22) Anmeldetag: 13.08.1998
(51) Int. Cl.: B29C 47/50, B29C 47/76, C08G 12/32

(54) **KONTINUIERLICHES VERFAHREN ZUR HERSTELLUNG VON AMINO- UND/ODER PHENOPLASTEN**
CONTINUOUS METHOD FOR PRODUCING AMINO- AND/OR PHENOPLASTS
PROCEDE CONTINU DE PRODUCTION D'AMINOPLASTES ET/OU DE PHENOPLASTES

(30) Priorität: 18.08.1997 DE 19735809
(43) Veröffentlichungstag der Anmeldung: 07.06.2000
(73) Patentinhaber: BASF AKTIENGESELLSCHAFT, 67056 Ludwigshafen (DE)
(72) Erfinder: BERBNER, Heinz, D-69509 Mörlenbach (DE); ETLING, Hans, D-67125 Dannstadt (DE); GUENTHER, Erhard, D-67454 Ha loch (DE); SIRCH, Tilman, D-67105 Schifferstadt (DE); ZETTLER, Hans, Dieter, D-67269 Grünstadt (DE)
(74) Vertreter: Isenbruck, Günter, Dr.
(86) Internationale Anmeldenummer: EP9805159
(87) Internationale Veröffentlichungsnummer: WO99008856

(56) Entgegenhaltungen:
- EP-A- 0 355 760
- DE-A- 19 653 627
- FR-A- 2 068 286
- US-A- 4 116 918

## Beschreibung

Die Erfindung betrifft ein Verfahren zur Herstellung von Amino- und/oder Phenoplasten sowie die Verwendung des Verfahrens zur Herstellung von Melamin- und/oder Phenolharzen, insbesondere von Melamin-Formaldehyd-Harzen, Harnstoff-Formaldehyd-Harzen, Phenolharzen und Abmischungen.

Aminoplaste (bei der Nachverformbarung von Halbzeugen ausgehärtete sowie direkt ausgehärtete Formteile, die im Spritzgieß- oder im Preßverfahren hergestellt werden), besitzen gute mechanische Eigenschaften, hohe Brandfestigkeit, Temperatur- und Lösungsmittelbeständigkeit, hohe Kratzfestigkeit und gutes Aussehen (Oberfläche). Die Ausgangsstoffe zur Herstellung von Aminoplasten sind im Vergleich zu Polyamiden oder anderen technischen Kunststoffen preisgünstig.

Ein herkömmliches Verfahren zur Herstellung von Melaminharzhalbzeug oder -fertigteilen besteht darin, daß man in einer Reihe von Verfahrensschritten zunächst in einem beheizbaren Rührkessel die Ausgangsstoffe diskontinuierlich zu etwa 50%-iger Amin-Formaldehyd-Harzlösung vorkondensiert, die erhaltene Lösung zu Melamin-Formaldehyd-Harzpulver sprühtrocknet, in einem weiteren Verfahrensschritt das erhaltene Harz-Pulver mit Füllstoffen in beispielsweise einem Pflugscharmischer trocken mischt, anschließend kontinuierlich über beheizbare Kalander zu einem Compound plastifiziert und in weiteren Verfahrensschritten zunächst grob zerkleinert, anschließend fein aufmahlt, durch Chargenvermischung eine Farbvereinheitlichung erreicht, zu rieselfähiger Formmasse rekompaktiert und schließlich durch Spritzguß- oder -pressenverarbeitung zu Fertigteilen verarbeitet.

Ein vereinfachtes Verfahren für die Herstellung eines Melamin-Formaldehyd-Harzes in einem "single pass"-Reaktor ist in der US 4,458,062 beschrieben. Hierbei ist wesentlich, daß von kristallinem Melamin und festem Formaldehyd ausgegangen wird und in Abwesenheit von Wasser oder eines sonstigen Lösungsmittels gearbeitet wird. Fester Formaldehyd ist jedoch teurer als wäßrige Formaldehyd-Lösungen. Zudem werden durch dieses Verfahren Melamin-Formaldehyd-Harze erhalten, die wesentlich verschiedene Eigenschaften aufweisen gegenüber Harzen, die in Gegenwart von Lösungsmitteln hergestellt werden.

Die DE-A 24 51 874 beschreibt ein verbessertes Verfahren zur Herstellung von Aminoplasten, wonach eine wäßrige Lösung eines Vorkondensats, gegebenenfalls unter Zusatz von Pigmenten, in einen Wirbelschichttrockner geleitet, dort auf Füllstoffe aufgesprüht, getrocknet, anschließend granuliert und direkt als Formmasse verwendet wird.

Demgegenüber ist es Aufgabe der Erfindung, ein kontinuierliches Verfahren zur Verfügung zu stellen, das eine einfache und preisgünstige Herstellung von Aminoplasten in wenigen Verfahrensschritten ermöglicht. Durch das erfindungsgemäße Verfahren sollen weiterhin die Verarbeitungs- und Produkteigenschaften von Aminoplasten auf einfache Weise in einem weiten Bereich gezielt eingestellt werden können.

Die Aufgabe wird erfindungsgemäß gelöst durch ein Verfahren, wonach in einem ersten Extruder eine Vorkondensat-Lösung hergestellt wird, die Vorkondensat-Lösung unter Zugabe von Zuschlagstoffen kontinuierlich einem zweiten Extruder bei teilweiser Befüllung im Einzugsbereich (E) und Entgasungsbereich (G) zugeführt wird, im zweiten Extruder entgast und anschließend zu einem Endprodukt ausgeformt wird.

Es wurde gefunden, daß durch Zugabe von entsprechend gewählten Zuschlagstoffen im zweiten Extruder die Reaktivität des Harzes eingestellt oder Produkteigenschaften, wie insbesondere die Schlagzähigkeit oder andere mechanische Eigenschaften, gezielt verbessert werden können. Das Verfahren ermöglicht es weiterhin, die Restfeuchte des Produkts im zweiten Extruder über Entgasungseinrichtungen einzustellen.

Bei dem erfindungsgemäßen Verfahren wird zunächst in aus der EP-B 0 355 760 bekannten Weise eine Vorkondensat-Lösung hergestellt, indem die Ausgangsstoffe, beispielsweise Melamin und wäßrige Formaldehyd-Lösung und gegebenenfalls Paraformaldehyd in einem Mol-Verhältnis Melamin: Formaldehyd von 1:1,5 bis 1:3, vorzugsweise von 1:2 bis 1:3, gegebenenfalls unter Zusatz von bekannten Modifizierungs- und Zusatzstoffen, die die Kondensationsreaktion nicht stören, beispielsweise Monoalkohole, Diole, Sulfonamide, Zucker, basische Katalysatoren wie Amine, Aminoalkohole, Hydroxyalkylmelamine, gemischt und bei Temperaturen von 120 bis 140°C auf einen Kondensationsgrad, der einem Viskositätsanstieg auf mindestens 1 Pa · s entspricht, in einem ersten Extruder vorkondensiert werden. Die Vorkondensat-Lösung hat einen Feststoffgehalt von 60 bis 90 %, vorzugsweise von 75 bis 80 %.

In entsprechender Weise können aus Harnstoff- und Formaldehyd-Lösungen, gegebenenfalls mit geeigneten Zusatzstoffen Harnstoff-Formaldehyd-Vorkondensatlösungen hergestellt werden.

Kernstück des Verfahrens ist ein zweiter Extruder, dem die in bekannter Weise im ersten Extruder hergestellte Vorkondensat-Lösung zugeführt wird.

Während der erste Extruder zu 100 % gefüllt sein muß, damit die Verweilzeit exakt eingestellt und somit ein definierter Kondensationsgrad erreicht werden kann, muß der zweite Extruder erfindungsgemäß im Einzugsbereich (E) sowie im Entgasungsbereich (G) teilbefüllt werden. Auf diese Weise ist es zum einen sowohl möglich, Zuschlagstoffe, über die Verarbeitungs- und Produkteigenschaften der Aminoplaste eingestellt werden können, direkt in den zweiten Extruder zuzugeben, als auch eine Entgasung der Masse im zweiten Extruder durchzuführen, die in einem vollständig befüllten Extruder wegen des damit verbundenen Austrags von Feststoffen nicht möglich wäre.

Der erste Extruder wird vorzugsweise in einem Drehzahlbereich von ca. 12 bis 20 Umdrehungen pro Minute betrieben, der zweite Extruder vorzugsweise mit 20 bis 300 Umdrehungen pro Minute, besonders bevorzugt 80 bis 150 Umdrehungen pro Minute.

Die Temperatur des zweiten Extruders kann abschnittsweise über Thermoelemente (TIC) kontrolliert werden, wobei in vorteilhafter Weise 30 bis 170°C, vorzugsweise 80 bis 120°C, eingestellt werden.

Am Ende des zweiten Extruders werden saure Katalysatoren, welche die spätere Aushärtung der Produkte bewirken, zugesetzt.

An den zweiten Extruder schließen sich Einrichtungen an, die in geeigneter Weise die Ausformung zum Endprodukt bewirken:

Gemäß einer ersten Variante kann über eine Mehrlochplatte die im zweiten Extruder entgaste und fertig rezeptierte Formmasse extrudiert, granuliert, nachgetrocknet und abgekühlt werden. Das Granulat entspricht in seinen Eigenschaften handelsüblichen Formmassen und steht zur Weiterverarbeitung beispielsweise im Spritzgießprozeß zur Verfügung.

Nach einer zweiten Variante kann am Ende des Extruders eine Breitschlitzdüse eingesetzt und die Rohformmasse darüber zu Endlosplatten verformt werden. Die Verarbeitungsparameter werden dabei so eingestellt, daß die Platte über ausreichende Formstabilität verfügt, jedoch noch nicht vollständig ausgehärtet ist. Die so erhaltene Platte wird anschließend kalibriert und abgekühlt. Dadurch erhält man als Verkaufsware ein weiterverarbeitbares Halbzeug, das in beheizbaren Pressen zum gewünschten ausgehärteten Fertigteil umgeformt werden kann.

Gemäß einer dritten Variante wird durch Nachschalten einer beheizbaren Druckbandpresse hinter der Breitschlitzdüse die Endlosplatte kalibriert und bei Temperaturen von 130 bis 190°C vollständig ausgehärtet. Das vollständig ausgehärtete Formteil kann in verschiedenen Einsatzgebieten, insbesondere im Elektro-, Bau- oder Fahrzeugsektor eingesetzt werden.

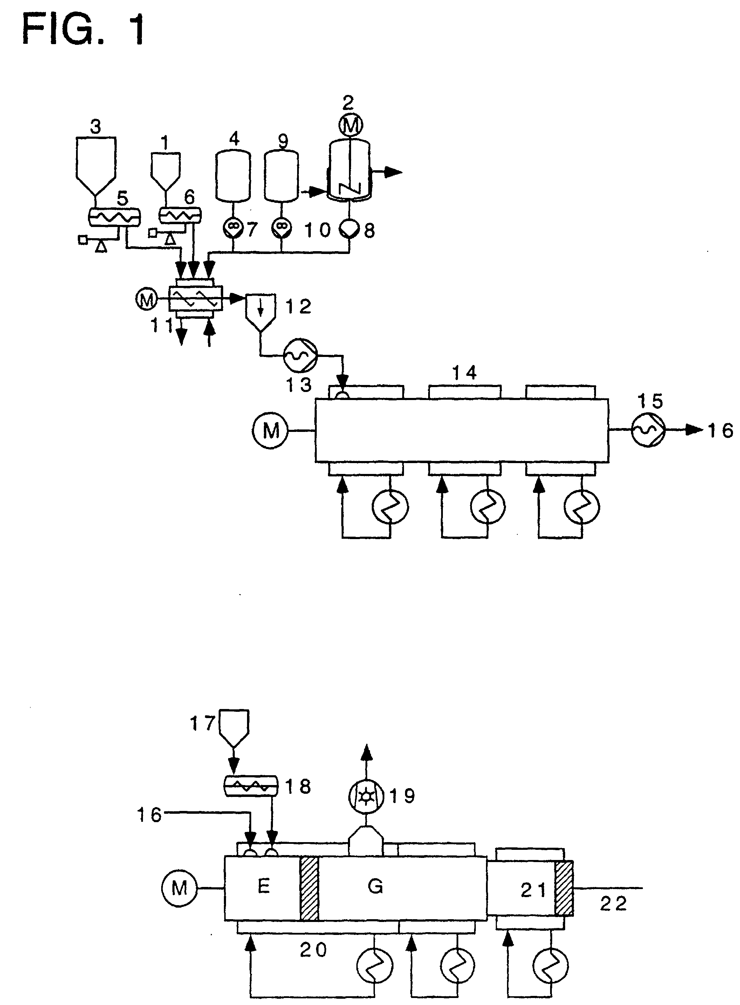

Die Erfindung wird im folgenden anhand der Zeichnung und eines Ausführungsbeispiels näher erläutert.

In einem ersten Extruder 14 wird in aus der EP-B 0 355 760 bekannten Weise eine Vorkondensat-Lösung nach der in Tabelle 1 angegebenen Rezeptur hergestellt.

**Tabelle 1:**

| **Rezeptur Vorkondensat-Lösung** | | |
|---|---|---|
| | Massen-% | mol-% bezogen auf Σ Triazin |
| Σ Triazin, davon | | 100 |
| Melamin | 43,35 | 90 |
| 5-Hydroxy-3-oxapentylmelamine-Mischung | 15,69 | 10 |
| Bisphenol A | 1,14 | 1,3 |
| Σ Formaldehyd, davon | | 200 |
| Paraformaldehyd | 11,72 | |
| Formaldehyd (40%) | 28,10 | |
| Diethylethanolamin | 0,17 | 0,4 |

Hierbei werden Melamin aus dem Vorratsbehälter 3 und Paraformaldehyd aus dem Vorratsbehälter 1 über kontinuierliche Dosierwaagen 5,6 dem Mischer 11 zugeführt. Flüssige Formaldehydlösung aus dem gerührten Vorratsbehälter 2, Diethylethanolamin aus dem Behälter 9 und wäßrige 5-Hydroxy-3-oxapentylmelamin-Mischung aus dem Behälter 4 werden über Dosierpumpen 7, 8, 10 ebenfalls dem Mischer 11 zugeführt. Die Suspension wird in einem Behälter 12 entgast und über eine Pumpe 13 einem kontinuierlichen, beheizbaren ersten Extruder 14 zudosiert. Danach werden die festen Bestandteile gelöst und das harzartige Vorkondensat 16 erzeugt. Das Vorkondensat entsteht als ca. 80%-ige hochviskose wäßrige Lösung.

Das Vorkondensat 16 wird entweder direkt oder über eine Dosierpumpe 15 einem zweiten Extruder 20 zugeführt. Dem zweiten Extruder 20 werden weiterhin trockengemischte Zuschlagstoffe aus dem Vorratsbehälter 17 über ein gravimetisches Dosieraggregat 18 zugeführt. Als Zuschlagstoffe kommen Stoffe in Betracht, die Verarbeitungs- und/oder Produkteigenschaften verändern, beispielsweise faser- oder pulverförmige anorganische Versteifungsmittel oder Füllstoffe, wie Glasfasern, Metallpulver, Metallsalze oder Silikate, biologische Verstärkungsmittel oder Füllstoffe wie zellulosische Fasern, Zellstoff- oder Holzmehl, Elastifizierungsmittel, beispielsweise Acrylate, Kautschuk, Polyglykole, Diole, Sorbit, Zucker, Pigmente, UV-Stabilisatoren, Reaktionsverzögerer, beispielsweise Amine, Gleitmittel, Puffer oder Antihaftmittel.

Tabelle 2 gibt ein Beispiel für eine Formmassenrezeptur an mit Zellstoff als Füllstoff, Diethylenglykol als Modifizierungsmittel, insbesondere zur Verbesserung der Rißstabilität, eine Stearatmischung als Gleitmittel, Natriumcarbonat als Puffer und Diallylphthalat als Antihaftmittel.

**Tabelle 2:**

| **Formmassenrezeptur** | Massen-% |
|---|---|
| Vorkondensat-Lösung 80% gemäß Rezeptur aus Tabelle 1 | 60,91 |
| Zuschlagstoffe | Σ 39,09 |
| Zellstoff (Füllstoff) | 30,46 |
| Diethylenglykol (Verzögerer, Weichmacher) | 4,06 |
| Stearatmischung (Gleitmittel) | 2,73 |
| Soda (Puffer) | 0,91 |
| Diallylphthalat (Antihaftmittel) | 0,91 |

Die Temperatur im zweiten Extruder 20 ist in bevorzugter Weise über Thermoelemente (TIC) gesteuert, wobei in vorteilhafter Weise 30 bis 170°C, vorzugsweise 80 bis 120°C, eingestellt werden.

Das Reaktionsgemisch wird im zweiten Extruder 20 über eine Vakuumpumpe 19 entgast, wobei die Restfeuchte der Formmasse eingestellt werden kann, bevorzugt in einem Bereich von 8 bis 15 %. Über die Breitschlitz-Düse 21 am Ende des zweiten Extruders 20 wird die Formmasse kontinuierlich zu Rohplatten geformt, die in einem Tauchkantenwerkzeug bei 140°C innerhalb von 0,5 bis 10 Minuten, vorzugsweise innerhalb von 1 bis 3 Minuten aushärten.

Die geformten und ausgehärteten Platten wurden auf Biegefestigkeit und Schlagzähigkeit geprüft. Zum Vergleich wurde eine handelsübliche Melamin-Formaldehyd-Formmasse ®MF 152 der Firma Raschig in einem Tauchkantenwerkzeug bei 140°C innerhalb von 5 Minuten ausgehärtet und die mechanischen Kenntwerte bestimmt. Es wurde die in DIN 7708-152 N genormte Materialgüte erreicht.

**Tabelle 3:**

| **Mechanische Kennwerte** | | |
|---|---|---|
| | Biegefestigkeit nach DIN 53452 N/mm² (23°C) | Schlagzähigkeit nach ISO 179 kJ/m² (23°C) |
| Formteil gemäß Ausführungsbeispiel | 102 | 6,6 |
| Formteil aus Formmasse ®MF 152, Firma Raschig | 76 | 4,8 |

## Patentansprüche

1. Verfahren zur Herstellung von Amino- und/oder Phenoplasten, wonach in einem ersten Extruder (14) eine Vorkondensat-Lösung hergestellt wird, **dadurch gekennzeichnet, daß** die Vorkondensat-Lösung (16) unter Zugabe von Zuschlagstoffen kontinuierlich einem zweiten Extruder (20) bei teilweiser Befüllung im Einzugsbereich (E) und Entgasungsbereich (G) zugeführt wird, im zweiten Extruder (20) entgast und anschließend zu einem Endprodukt ausgeformt wird.

2. Verfahren nach Anspruch 1, **dadurch gekennzeichnet, daß** der erste Extruder in einem Drehzahlbereich von 12 bis 20 min⁻¹ und der zweite Extruder in einem Drehzahlbereich von 20 bis 300 min⁻¹, vorzugsweise 80 bis 150 min⁻¹, betrieben wird.

3. Verfahren nach Anspruch 1 oder 2, **dadurch gekennzeichnet, daß** der zweite Extruder (20) beheizt ist, insbesondere auf 30 bis 170°C, vorzugsweise auf 80 bis 120°C.

4. Verfahren nach einem der Ansprüche 1 bis 3, **dadurch gekennzeichnet, daß** die Restfeuchte im zweiten Extruder auf 8 bis 15 Gew.-% Wasser eingestellt wird.

5. Verfahren nach einem der Ansprüche 1 bis 4, **dadurch gekennzeichnet, daß** das Endprodukt eine Formmasse ist.

6. Verfahren nach einem der Ansprüche 1 bis 4, **dadurch gekennzeichnet, daß** das Endprodukt ein nachverformbares Halbzeug ist.

7. Verfahren nach einem der Ansprüche 1 bis 4, **dadurch gekennzeichnet, daß** das Endprodukt ein Fertigteil ist.

8. Verwendung des Verfahrens nach einem der Ansprüche 1 bis 7 zur Herstellung von Melaminharzen, insbesondere von Melamin-Formaldehyd-Harzen.

9. Verwendung des Verfahrens nach einem der Ansprüche 1 bis 7 zur Herstellung von Harnstoff-Formaldehyd-Harzen.

## Claims

1. A process for preparing aminoplastics and/or phenolics, in which a precondensate solution is prepared in a first extruder (14), which comprises continuously feeding the precondensate solution (16), with addition of additives, to a second extruder (20) with partial filling in the feed section (E) and devolatilization section (G), devolatilizing the precondensate solution in the second extruder (20) and then forming it to give an end product.

2. A process as claimed in claim 1, wherein the first extruder is operated in a range of rotation rates of from 12 to 20 min⁻¹ and the second extruder in a range of rotation rates from 20 to 300 min⁻¹, preferably from 80 to 150 min⁻¹.

3. A process as claimed in claim 1 or 2, wherein the second extruder (20) is heated, in particular at from 30 to 170°C, preferably at from 80 to 120°C.

4. A process as claimed in any one of claims 1 to 3, wherein the residual moisture is adjusted in the second extruder to from 8 to 15% by weight of water.

5. A process as claimed in any one of claims 1 to 4, wherein the end product is a molding composition.

6. A process as claimed in any one of claims 1 to 4, wherein the end product is a semifinished product capable of further shaping.

7. A process as claimed in any one of claims 1 to 4, wherein the end product is a finished part.

8. The use of a process as claimed in any one of claims 1 to 7 for preparing melamine resins, in particular melamine-formaldehyde resins.

9. The use of a process as claimed in any one of claims 1 to 7 for preparing urea-formaldehyde resins.

## Revendications

1. Procédé de production d'aminoplastes et / ou de phénoplastes, selon lequel, dans une première extrudeuse (14), on prépare une solution de précondensat, **caractérisé en ce que** la solution de précondensat (16) est amenée en continu, avec addition d'additifs, à une deuxième extrudeuse (20) avec chargement partiel dans la zone d'entrée (E) et la zone de dégazage (G), dégazée dans une deuxième extrudeuse (20) et moulée ensuite en un produit final.

2. Procédé selon la revendication 1, **caractérisé en ce que** la première extrudeuse est conduite dans une plage de vitesse de rotation de 12 à 20 min.⁻¹ et la deuxième extrudeuse dans une plage de vitesse de rotation de 20 à 300 min.⁻¹, de préférence de 80 à 150 min.⁻¹.

3. Procédé selon la revendication 1 ou 2, **caractérisé en ce que** la deuxième extrudeuse (20) est chauffée, en particulier à une température de 30 à 170°C, de préférence de 80 à 120°C.

4. Procédé selon l'une des revendications 1 à 3, **caractérisé en ce que** l'humidité résiduelle dans la deuxième extrudeuse est ajustée à une teneur de 8 à 15% en poids d'eau.

5. Procédé selon l'une des revendications 1 à 4, **caractérisé en ce que** le produit fini est une masse de moulage.

6. Procédé selon l'une des revendications 1 à 4, **caractérisé en ce que** le produit final est un semi-fini refaçonnable.

7. Procédé selon l'une des revendications 1 à 4, **caractérisé en ce que** le produit final est un élément préfabriqué.

8. Utilisation du procédé selon l'une des revendications 1 à 7 pour la production de résines de mélamine, en particulier des résines de mélamine - formaldéhyde.

9. Utilisation du procédé selon l'une des revendications 1 à 7 pour la préparation de résines d'urée - formaldéhyde.
